(19) Europäisches Patentamt / European Patent Office / Office européen des brevets

(11) **EP 4 632 715 B1**

(12) **EUROPEAN PATENT SPECIFICATION**

(45) Date of publication and mention
of the grant of the patent:
**24.06.2026  Bulletin 2026/26**

(21) Application number: **24290008.2**

(22) Date of filing: **11.04.2024**

(51) International Patent Classification (IPC):
**G08G 5/00** (2025.01)          **G08G 5/26** (2025.01)
**G08G 5/53** (2025.01)          **G08G 5/55** (2025.01)
**G08G 5/72** (2025.01)          **G01S 5/00** (2006.01)
**G01S 5/02** (2010.01)

(52) Cooperative Patent Classification (CPC):
**G08G 5/26; G01S 5/0294; G08G 5/53; G08G 5/55;
G08G 5/727;** G08G 5/57

(54) **METHOD FOR CHARACTERIZING A CARRIER EQUIPPED WITH A RADIO-TRANSMITTER**

VERFAHREN ZUR CHARAKTERISIERUNG EINES TRÄGERS MIT EINEM FUNKSENDER

PROCEDE DE CARACTERISATION D'UN SUPPORT EQUIPE D'UN EMETTEUR RADIO

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**15.10.2025  Bulletin 2025/42**

(73) Proprietors:
• **Mitsubishi Electric R&D Centre Europe B.V.
1119 NS  Schiphol Rijk Amsterdam (NL)**
Designated Contracting States:
**FR**
• **MITSUBISHI ELECTRIC CORPORATION
Chiyoda-ku
Tokyo 100-8310 (JP)**
Designated Contracting States:
**AL AT BE BG CH CY CZ DE DK EE ES FI GB GR
HR HU IE IS IT LI LT LU LV MC ME MK MT NL NO
PL PT RO RS SE SI SK SM TR**

(72) Inventors:
• **Bechihi, Adel
35708 RENNES CÉDEX 7 (FR)**
• **Nguyen, Viet-Hoa
35708 RENNES CÉDEX 7 (FR)**
• **Gresset, Nicolas
35708 RENNES CÉDEX 7 (FR)**

(74) Representative: **Plasseraud IP
104 Rue de Richelieu
CS92104
75080 Paris Cedex 02 (FR)**

(56) References cited:
**US-A1- 2022 415 191**

## Description

The invention relates to a method for characterizing a carrier which is equipped with a radio-transmitter, and also to a detection system suitable for executing such method.

## -- BACKGROUND OF THE INVENTION --

Radars are active detection devices that allow detecting aircrafts or ships, and that provide information on trajectories of the detected aircrafts or ships. However, detection using a radar does not suit any vehicle to be detected and any environment conditions, in particular when the vehicle does not generate sufficient radiation reflection. In addition, active devices are complex because they implement radiation sources and systems for pointing the radiation emission direction towards the vehicle to be detected or for producing a scan of a geographical zone to monitor.

Nowadays, road vehicles and mobile carriers such as aircrafts, drones, in particular unmanned aerial systems also known as UAS, road vehicles, etc, are most often equipped onboard with radio-transmitters for transmitting radio signals to external receivers, whatever these latter. For example, cars may be equipped with radio-transmitters for communicating with road-side units, cellular base stations, control servers, etc. The radio signals propagate in free space and can therefore be detected by a receiver dedicated to monitoring, for example for statistical traffic analysis or security propose, in particular in a neighbourhood of sensitive premises.

Passive detection devices are designed for detecting the radio signals that are emitted from carriers equipped onboard with radio-transmitters which produce these radio signals. Then, there is a need for passive detection systems that can characterize a detected carrier, in particular indicating whether it is possibly a jet, a helicopter, an unmanned aerial system, etc. as air traffic examples. In particular, US 2022/0415191 A1 discloses classifying a drone into a drone class or a plurality of drone classes based on physical characteristics of the radio signal transmitted by this drone. There is an additional need for such passive detection system that is configured for providing quantified indication relating to the carrier being of each of several carrier types. Indeed, such quantified information reduces errors that could result from characterizations that are provided each in the form of a single carrier type.

The present invention aims at meeting such needs.

## -- SUMMARY OF THE INVENTION --

To this end, a first aspect of the invention proposes a method defined in claim 1.

Thus, the invention method proceeds by combining information which originates from measurements with mobility models which are initially available. The method provides a plurality of matching score values relating to several of the mobility models, thus providing to an operator quantified information about the transmitter-equipped carrier meeting each of several mobility-models.

In addition, the invention method can be implemented using a detection system of passive type.

If each mobility model of the subset is associated with one carrier type such that the at least one state value or the at least one state variation value of this mobility model is compatible with a transmitter-equipped device of said carrier type, the method may further comprise assigning the carrier type of the best-fit mobility model to the carrier equipped with the transmitter.

Thus, the response about the carrier type which is provided by the invention method to the operator is also expressed as several quantified values, so as to be maximal but not-distorted as would be a response comprised of a single carrier type.

The carrier type associated with at least one of the mobility models may belong to a list comprising: a car, a truck, a plane, in particular an airliner, a light passenger aircraft or a jet fighter, a helicopter, an unmanned aerial system, in particular of quadrotor type, an orbiting satellite, a bicycle, a unicycle, a mobile robot, a pedestrian human carrier, a ship and a submarine.

In various implementations of the invention method, the measured feature of the radio signals may comprise at least one among:

a reception radio power, and the relation model may then comprise a path loss model;

a reception direction of the radio signals, and the relation model may then comprise at least one detection angle range such as azimuth angle and/or elevation angle;

at least one radio signal detection time, and the relation model may then comprise at least one detection delay range; and

a Doppler-shift value, and the relation model may then comprise a Doppler-shift model.

Obviously, the invention method may be combined with radio signal measurements of other types.

In implementations of a first type for the invention method, the matching score value is computed for each mobility model of the subset using a Bayesian inference. Then, the matching score value is a probability value for the carrier equipped with the transmitter to meet the mobility model.

In implementations of other types for the invention method, the matching score value is computed for each mobility model of the subset using a metrics which is suitable for quantifying a difference between the at least one collected measurement result and at least one value for the radio signal feature that is inferred from the mobility model through the relation model.

Generally for the invention, each mobility model may be obtained from a database.

Possibly, the invention method may further comprise comparing each of the computed matching score values with a mismatch threshold and producing a warning signal if all computed matching score values are lower than the mismatch threshold.

Also possibly, the invention method may further comprise comparing the matching score value computed for the best-fit mobility model with a positive-identification threshold. Then, if this matching score value computed for the best-fit mobility model is above the positive-identification threshold, the invention method may also comprise supplementing the best-fit mobility model with at least one additional data which corresponds to or is inferred from the at least one collected measurement result of the radio signals. Such supplement to the best-fit mobility model can be implemented easily when this best-fit mobility model is of a data-driven type. However, it may also be possible for other mobility model types.

Again generally for the invention, each mobility model may be suitable for determining variations of the at least one feature of the radio signals over time, using the relation model. In such case, the step of collecting at least one measurement result may comprise collecting a plurality of successive measurement results which are associated with respective time values.

In particular, each mobility model may be of at least one of the following types:

a data-driven type where the mobility model comprises a series of state values to occur at respective time values;

a physics-based equation that connects state values with respective time values;

an empirical equation, in particular determined by using a neural network from measurement results collected before the method is implemented, that connects state values with respective time values; and

a parametrized type where variations of state values over time depend on one or several model parameter(s).

If the carrier is a mobile one and the transmitter transmits the radio signals during an ongoing moving of the carrier, and a value of the radio signal feature depends on a position or velocity of the carrier, the at least one state value may comprise at least one among:

position values possible for the carrier at respective time values,

velocity values possible for the carrier at respective time values, and

possible values for at least one angle between a direction tangential to a trajectory of the carrier and a reference direction at respective time values.

Obviously, any state parameter type is possible for implementing the invention.

In such cases with mobile carrier and successive measurements, the method result is not distorted by assuming that a single mobility model corresponds to the carrier, as such distortion would occur if one trajectory were first inferred from the measurement results and thereafter compared to the mobility models.

When successive measurement results are collected from the at least one receiver while the carrier is moving, the method invention may comprise for each mobility model out of the subset:

- inferring from this mobility model an information about a state of the carrier at a time value that corresponds to or is later than at least one newly collected measurement result; and

- calculating an updated matching score value relating to the carrier to match the mobility model by using the information and the at least one newly collected measurement result.

Possibly, the updated matching score value for each mobility model of the subset may be calculated by combining the information, at least one probability value related to the at least one newly collected measurement result and a matching score value for the carrier to match the same mobility model as available before the at least one newly collected measurement result.

Still in case of mobile carrier and successive measurements, the steps of collecting at least one further measurement result, inferring a further information from each mobility model of the subset about a state of the carrier at a time value that corresponds to or is later than the further measurement result, and calculating further updated matching score values relating to the carrier to match each mobility model of the subset by using the further information and the further measurement result, may be executed as a loop which is repeated while the carrier is moving.

For simplified calculations of the updated matching score values, these latter may be calculated assuming that measurement noises respectively effective for the measurement results which are collected successively are not correlated with one another.

Generally for the invention, the radio signals transmitted from the carrier may be detected by a plurality of time-synchronized receivers that each perform the measurements of the at least one feature of these radio signals. Then, the matching score values may be calculated by a computing node which is common to the plurality of time-synchronized receivers. Using several receivers in this way provides more measurement information, so that the characterization of the carrier which is provided to the operator can be more accurate.

Again generally for the invention, if at least one of the mobility models of the subset is of parametrized-type, respective matching score values may be calculated separately for several tested values of each model parameter, and one of the tested values of each model parameter may be selected based on a highest one among the matching score values.

Again generally for the invention, the matching score values may be calculated using prior-knowledge values which are respectively associated with the mobility models of the subset. These prior-knowledge values may originate from knowledge acquired before executing the invention method. Faster convergence is obtained in this way for the matching score values repeatedly updated for each mobility model of the subset, because the initial calculation entries already contain more information when available.

Finally, the invention method may be implemented for many applications, including monitoring a geographical zone, in particular statistically analysing a traffic currently occurring in the geographical zone or characterizing a transmitter-equipped mobile carrier that is currently intruding into this geographical zone.

Another object of the invention proposes a detection system defined in claim 14.

This detection system is configured to execute a method according to the first invention aspect, including its improvements and advantageous optional features.

Advantageously for many applications, the detection system may further comprise a casing which accommodates the computing node and the storage unit, and the at least one receiver is connected to the computing node through the casing. A mobile system is thus obtained so that on-site installation and easy use of such detection system are allowed in any environment.

These and other features of the invention will be now described with reference to the appended figures, which relate to preferred but not-limiting implementations of the invention.

-- BRIEF DESCRIPTION OF THE DRAWINGS --

Figure 1 illustrates symbolically operation of a detection system in accordance with the present invention; and

Figure 2 shows steps of a method in accordance with the present invention.

-- DETAILED DESCRIPTION OF THE INVENTION --

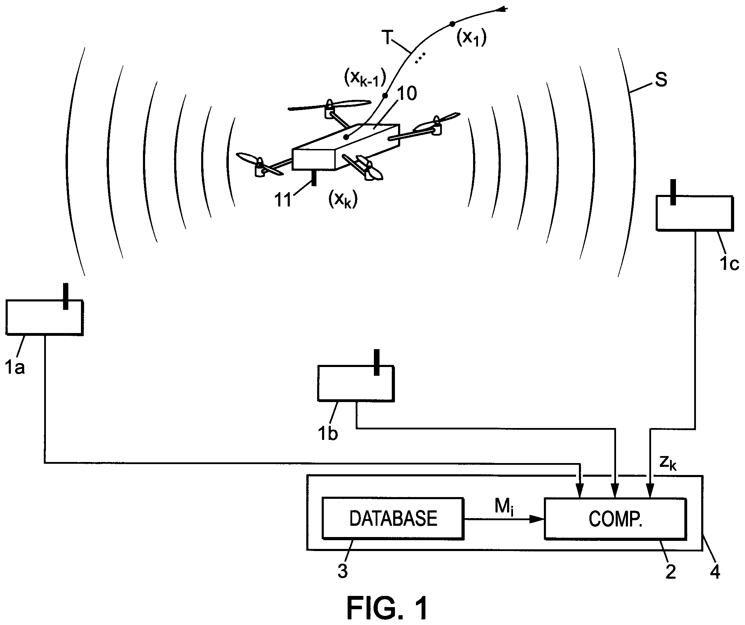

A shown in Figure 1, a detection system suitable for implementing the invention comprises one or several radio-receiver(s), for example three radio-receivers referenced 1a, 1b and 1c. In case of a plurality of radio receivers, they may be time-synchronized but not necessarily. The detection system further comprises a computing node 2, noted COMP. and a storage unit 3, noted DATABASE. The computing node 2 and the storage unit 3 may be enclosed within a casing 4, with connections to the receivers 1a-1c extending through dedicated passages in the casing 4. The receivers 1a-1c are each configured for performing measurements on radio signals detected by this receiver. For example, each receiver can measure a radio power, a detection direction, a detection time and/or a Doppler shift value for each detected radio signal. Thus, for a radio signal originating from one radio source but detected by the receivers 1a-1c of the system, each of these receivers assigns to the radio signal a respective detection power value, respective azimuth and elevation values, respective detection time value and/or respective Doppler shift value, as a result of each measurement. These measurement results are transmitted to the computing node 2 for being processed according to the invention. To this purpose, the computing node 2 can access a database recorded in the storage unit 3. This detection system may be dedicated to continually monitoring a traffic currently existing within a geographical zone. For example, it is dedicated to monitoring road traffic, air traffic or maritime activity in specified zones, for example for statistics purpose about road traffic or for identifying intrusions that occur in an air zone close to a sensitive site such as industrial premises.

In the example of Figure 1, an unmanned aerial system commonly called flying drone 10 has penetrated the monitored geographical zone along a trajectory T. This intrusion has to be characterized and may be compared with declared traffic for determining whether it should be considered as possible threat for the sensitive site. It is assumed that the drone 10 has a radio transmitter 11 onboard, and that this latter transmits radio signals S during flight of the drone, for example to a radio-station (not represented) for allowing flight control. The radio signals S can be detected and measured repeatedly by each of the radio-receivers 1a-1c, as long as the drone 10 in within a detection range of these receivers. In particular for the statistics and intrusion identification purposes here-above mentioned, it is an issue to characterize a type of the carrier of the radio-transmitter 11 from the transmitted radio signals S. In the illustrated example, the carrier type is a quadrotor-type flying drone, but it may be any vehicle with a radio-transmitter onboard.

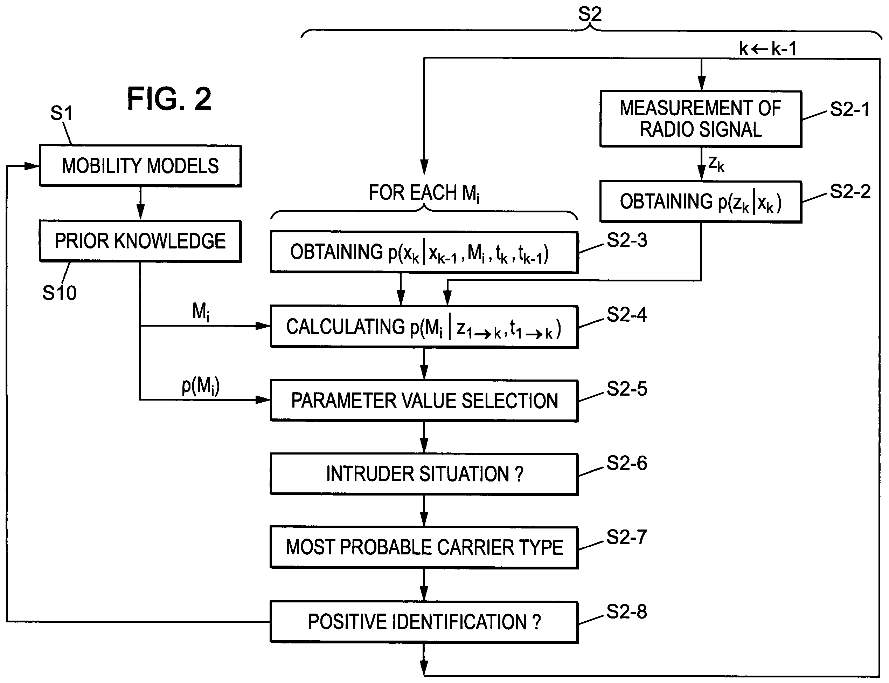

For implementing the invention, the database in the storage unit 3 contains a plurality of mobility models that correspond each to an identified carrier type. Provision of such library of mobility models corresponds to step S1 in Figure 2. In the general part of this description, such content of the database has been called set of mobility models. For example, one or several mobility model(s) may be available corresponding to airliners as carrier type, other mobility models may correspond to fighter jets, still others corresponding to helicopters, and possibly still others corresponding to flying drones of various types. Each mobility model may be of one out of several predefined types, including a physics-based type, data-driven type and empirical equation type, and may be possibly parametrized in each case. It is to be noted that each mobility model may not be associated with an identified carrier type, but just be an identified utility model.

A mobility model of the physics-based type relies on equations which determine a moving of a vehicle of the carrier type that is associated with the mobility model. For example, a mass value of the carrier may constitute a parameter of the mobility model. Differing mass values may correspond to several numbers of passengers onboard the carrier. A general formulation for such physics-based mobility model is:

$$\begin{cases} \dot{x} = f(x, u, t) \\ y = h(x, u, t) \end{cases}$$

where x represents the state of the carrier which is a hidden variable containing all the features that describe the carrier behavior, u represents inputs such as forces and actions applied to the carrier, y represents outputs which are quantities that can be measured and which provide partial or complete information on the state of the carrier, and t represents time. All these quantities vary with time t, and f is a mathematical function that determines the time-variations of the carrier state x based on physics rules. f-function actually constitutes the mobility model as introduced in the general part of the present description. h is another mathematical function that determines the measured quantities from the current carrier state x and inputs u. h-function and y-output are possible implementations of the relation model and feature of the radio signals, respectively, as also mentioned in the general part of the present description. Most often but not limitingly, the state of the carrier is comprised of its instant position and velocity in three-dimensional space, possibly supplemented with other carrier state parameters in case of complex carrier structures, such as angular orientation of the carrier if relevant for any reason. In the context of the present invention, y may include the radio power of the radio signals S as measured by each radio-receiver, Doppler shift of these signals S as detected by each radio-receiver, and also detection angles and/or detection times at each of the radio-receivers 1a-1c. In case of measured radio power, h-function includes the physics law for the propagation of the radio signals, including the propagation delay and decrease of the radio-signal power as functions of the separating distance between the carrier and each radio-receiver. In case of measured Doppler shift, h-function includes the physics law of Doppler effect related to radial velocity. When the mobility model is parametrized, at least one model parameter is involved in the f-function, and possibly also in the h-function.

Practically for computation, discretization is applied to time, so that the above formulation for a physics-based mobility-model becomes:

$$\begin{cases} x_k = f_k(x_{k-1}, u_k) \\ y_k = h_k(x_k, u_k) \end{cases}$$

where $x_{k-1}$ and $x_k$ are respective values of the carrier state at two successive times $t_{k-1}$ and $t_k$, $t_k$ being posterior to $t_{k-1}$. Possibly but not necessarily, new measurements have been performed between both times $t_{k-1}$ and $t_k$ by the radio-receivers 1a-1c. k is thus an integer index that identifies the successive updates of the probability values, and $f_k$ and $h_k$ are

functions corresponding respectively to previous f- and h-functions, but reflecting the time-dependency of these latter through function variations in time-discretized formulation. When constant, the time interval $\Delta t = t_k - t_{k-1}$ may be called sampling time. $y_k$ then denotes the results of the measurements performed between times $t_{k-1}$ and $t_k$, and $u_k$ denotes the inputs effective during the same time interval.

Another well-known formulation for physics-based mobility models combines a transfer function with Laplace domain.

A data-driven mobility model is comprised of a list of values for the carrier state x each associated with a time value $t_n$: $x_n(t_n)$. A well-known algorithm allows scanning such list from a variable initial state and interpolating between the listed state values.

Also possibly, a mobility model may be comprised of an empirical equation determined from measurements performed beforehand on a carrier. The empirical equation connects state values to corresponding respective time values. It may be determined using a neural network from the state measurement results and corresponding measurement times.

Simple mobility models relate to constant-speed or constant-acceleration motions for the carrier. More complex mobility models may relate in particular to bicycles, unicycles or quadrotor drones when considering carrier orientation angles and/or degrees of freedom internal to the carrier additionally to position and velocity coordinates.

Step S10 in Figure 2 consists in providing prior knowledge that is possibly available for the mobility models of step S1. Such prior knowledge may be expressed as initial respective probability values for the moving of the carrier 10 to match each of the mobility models of the complete set stored in the database. Such prior knowledge may result for example from a statistical knowledge about the traffic which occurs in the monitored geographical zone, with proportion values related to each carrier type or to several of the mobility models. Prior knowledge may also originate from first analysis of some of the measurement results, for example excluding a carrier type such as a car when the first measurement results evidence a vertical velocity component. When the prior knowledge is limited to assuming that the moving of the carrier 10 matches one among N identified mobility models without further information, N being an integer higher than one, an initial probability value assigned to each of these identified mobility models may equal 1/N. The mobility models that are associated in step S10 with non-zero initial probability values are denoted $M_i$, i being an integer index, and form a subset of the whole content of the database 3. The initial probability value associated with mobility model $M_i$ is denoted $p(M_i)$.

The invention method may then proceed as a loop S2 which is executed repeatedly during the moving of the carrier 10, each execution of the loop delivering updated values for the probability for the moving of the carrier 10 to match each mobility model $M_i$. For example, the loop S2 may be executed at constant time intervals or each time a defined number of new measurements of the radio signals S are provided by the radio-receivers 1a-1c. The integer index k therefore also identifies the number of each iteration the loop S2. In the implementation example described with reference to Figure 2, the loop S2 comprises substeps S2-1 to S2-4, and also optionally substeps S2-5 to S2-8. The result of each execution of the loop S2 consists more exactly in updated respective values of the probabilities for the moving of the carrier 10 to match each one of the mobility models $M_i$ given the measurement results $z_1,..., z_k$ obtained at the respective times $t_1,..., t_k$, each of these probabilities being noted $p(M_i|z_{1 \to k}, t_{1 \to k})$.

The probability $p(M_i|z_{1 \to k}, t_{1 \to k})$ can be calculated in the following way:

$$p(M_i|z_{1 \to k}, t_{1 \to k}) = \frac{1}{p(z_{1 \to k}|t_{1 \to k})} p(M_i|t_{1 \to k}) p(z_{1 \to k}|M_i, t_{1 \to k})$$

$$= \frac{1}{p(z_{1 \to k}|t_{1 \to k})} p(M_i) p(z_{1 \to k}|M_i, t_{1 \to k})$$

$$= \frac{1}{p(z_{1 \to k}|t_{1 \to k})} p(M_i) \int_{x_{1 \to k}} p(z_{1 \to k}, x_{1 \to k}|M_i, t_{1 \to k}) dx_{1 \to k}$$

$$= \frac{1}{p(z_{1 \to k}|t_{1 \to k})} p(M_i) \int_{x_{1 \to k}} p(z_{1 \to k}|x_{1 \to k}, M_i, t_{1 \to k}) p(x_{1 \to k}|M_i, t_{1 \to k}) dx_{1 \to k}$$

$$= \frac{1}{p(z_{1 \to k}|t_{1 \to k})} p(M_i) \int_{x_{1 \to k}} p(z_{1 \to k}|x_{1 \to k}) p(x_{1 \to k}|M_i, t_{1 \to k}) dx_{1 \to k}$$

where:

$p(z_{1 \to k}|t_{1 \to k})$ is the probability distribution of the measurement result sequence $z_1, ..., z_k$ at measurement times $t_1 ..., t_k$,
$p(x_{1 \to k}|M_i, t_{1 \to k})$ is the probability of state sequence $x_1(t_1), ..., x_k(t_k)$ given a mobility model $M_i$, and corresponds to the so-called information introduced in the general part of the present description; and
$p(z_{1 \to k}|x_{1 \to k})$ is the probability of obtaining the measurement result sequence $z_{1 \to k}$ given the state sequence $X_{1 \to k}$. It is based on state-measurement mapping and also considers measurement noise that occurs because of sensor imperfections and radio propagation from the transmitter 11 to each of the receivers 1a-1c.

The first transformation in the above development involves Bayes identity for conditional probabilities, the second transformation involves the independence between the mobility model and the measurement times, the third transformation involves marginalization of $p(z_{1 \to k}|M_i, t_{1 \to k})$ with respect to the state values, the fourth transformation involves Bayes identity for joined probabilities, and the fifth transformation results from the measurements being independent from the mobility models and the measurement times when the state is known. Since $p(z_{1 \to k}|t_{1 \to k})$ is independent from the mobility models $M_i$, it can be ignored so that:

$$p(M_i|z_{1 \to k}, t_{1 \to k}) \propto p(M_i) \int_{x_{1 \to k}} p(z_{1 \to k}|x_{1 \to k}) p(x_{1 \to k}|M_i, t_{1 \to k}) dx_{1 \to k}$$

Then, two simplifying assumptions may be implemented. The first one is the following Markov assumption expressed as $p(x_k|x_{1 \to k-1}) = p(x_k|x_{k-1})$. When applied to each mobility model $M_i$, it leads to:

$$p(x_{1 \to k}|M_i, t_{1 \to k}) = \prod_{j=1}^{k} p\left(x_j|x_{j-1}, M_i, t_j, t_{j-1}\right)$$

When the Markov assumption is not respected by a basic formulation of the physics-based model, it is possible through some transformations to give a new formulation of the model where the new states meet the Markov assumption. $p(x_j|x_{j-1}, M_i, t_j, t_{j-1})$, referred to as state distribution, is then the relevant distribution to study. The function that connects state value $x_j$ to $x_{j-1}$, called state-transition function, allows propagating information from one state value to the next one. The state-transition function is generally fully described by the mobility model. Then, the state distribution can be computed analytically when related noise distribution is known and easy to transform. However, when the noise distribution is hard to compute analytically, numerical methods provide an approximated representation of the state distribution which is easier to handle.

The second assumption relates to the successive measurements being not correlated. It can be expressed as:

$$p(z_{1 \to k}|x_{1 \to k}) = \prod_{j=1}^{k} p\left(z_j|x_j\right)$$

where $p(z_k|x_k)$ is the probability for obtaining the measurement result $z_k$ assuming that the carrier state is $x_k$. It is commonly referred to as observation distribution.

As an example, the measurement may relate to received signal strength indicator, commonly referred to as RSSI. The measurement result $z_k$ is then connected to the position $p_k$ of the carrier 10 by the following formula:

$$z_k = P_{Tx} + A + B \cdot \log(\|p_k - p_{Rx}\|) + w_k$$

where $P_{Tx}$ is the transmission power of the transmitter 11, $w_k$ is the shadowing noise possibly defined by a zero-centered Gaussian variable with standard deviation $\sigma_w$: $w_k \sim \mathcal{N}(0, \sigma_w)$, A and B are pathloss parameters, and $p_{Rx}$ is the position of a selected one of the radio-receivers 1a-1c. Assuming that $P_{Tx}$, A, B and $p_{Rx}$ are known, the measurement result $z_k$, given the position $p_k$ of the carrier 10, has the probability distribution:

$$p(z_k|p_k) = \mathcal{N}(P_{Tx} + A + B \cdot \log(\|p_k - p_{Rx}\|), \sigma_w)$$

Same principle is applied for any state-observation mapping that contains some randomness. If the probability distribution of the random components which contribute to the measurement results is known, the observation distribution is computed using function transformations when possible and simple, e.g., additive Gaussian noise. When the noise probability distribution is unknown or hard to model, numerical methods allow again, as for the state distribution, to compute a representation of the observation distribution by getting samples from the noise distribution and transforming them in the domain of the measurement results through the state-observation mapping.

As another example, the measurement may relate to Doppler shift existing in the received signal. The measurement result $z_k$ is then connected to the velocity-vector $v_k$ of the carrier 10 by the following formula:

$$z_k = \Delta f_k = f_{Tx_k} \left( \frac{v_k}{c} + \varphi_k \right)$$

where $z_k = \Delta f_k$ is the Doppler shift at measurement time k, $f_{Tx_k}$ is the frequency of the signal transmitted by the transmitter at transmission time k, c is the light velocity, $v_k$ is the speed of the transmitter at transmission time k, and $\varphi_k$ is the Doppler shift noise defined by a zero-centered Gaussian variable with standard deviation $\sigma_\varphi$: $w_k \sim \mathcal{N}(0, \sigma_\varphi)$. Then, the relation model for such Doppler-shift measurement may be:

$$p(z_k|v_k) = \mathcal{N} \left( f_{Tx_k} \left( \frac{v_k}{c} \right), f_{Tx_k} \sigma_\varphi \right)$$

Assuming both the Markov assumption and the independent-measurement assumption, one obtains for the updated probability for the carrier moving to match the mobility model $M_i$ given the k collected measurement results:

$$p(M_i|z_{1 \to k}, t_{1 \to k}) \propto p(M_i) \int_{x_{1 \to k}} p(z_{1 \to k}|x_{1 \to k}) p(x_{1 \to k}|M_i, t_{1 \to k}) dx_{1 \to k}$$

$$= p(M_i) \int_{x_{1 \to k}} \prod_{j=1}^{k} p(z_j|x_j) p(x_j|x_{j-1}, M_i, t_j, t_{j-1}) dx_{1 \to k}$$

$$= p(M_i|z_{1 \to k-1}, t_{1 \to k-1}) \int_{x_k} p(z_k|x_k) \int_{x_{k-1}} p(x_k|x_{k-1}, M_i, t_k, t_{k-1}) dx_{k-1} dx_k$$

The last above-transformation is obtained by separating the factors corresponding to j=k and identifying all other factors for j=1,..., k-1 as $p(M_i|z_{1 \to k-1}, t_{1 \to k-1})$.

This shows that under the preceding assumptions the probability value $p(M_i|z_{1 \to k}, t_{1 \to k})$ can be calculated recursively using $p(M_i|z_{1 \to k-1}, t_{1 \to k-1})$ as resulting from the preceding execution of the loop S2. As a reminder, $p(x_k|x_{k-1}, M_i, t_k, t_{k-1})$ is the state distribution which forms the information for mobility model $M_i$, $p(z_k|x_k)$ is the observation distribution for the system of concern. The updated probability value $p(M_i|z_{1 \to k}, t_{1 \to k})$ is thus obtained as a result of the k-th execution of the loop S2, and the probability value $p(M_i|z_{1 \to k-1}, t_{1 \to k-1})$ was obtained as a result of the preceding execution of the loop S2.

Substep S2-1 in the loop S2 consists in acquiring new measurement result $z_k$ from the radio-receivers 1a-1c, subsequent to the measurement results already used in the preceding executions of the loop S2.

Substep S2-2 in the loop S2 consists in obtaining the observation distribution $p(z_k|x_k)$ as a function of the state value $x_k$.

Substeps S2-3 and S3-4 in the loop S2 are performed for each mobility model $M_i$ of the subset.

Substep S2-3 consists in obtaining the state distribution $p(x_k|x_{k-1}, M_i, t_k, t_{k-1})$ as a function of both state values $x_{k-1}$ and $x_k$.

Substep S2-4 consists in calculating the probability value $p(M_i|z_{1 \to k}, t_{1 \to k})$ by combining the probability distributions obtained in substeps S2-2 and S2-3 with the probability value $p(M_i|z_{1 \to k-1}, t_{1 \to k-1})$ obtained in the preceding execution of the loop S2. $p(M_i|z_{1 \to k-1}, t_{1 \to k-1})$ is thus the k-th updated probability value for the moving of the carrier 10 to match the mobility model $M_i$.

The three following substeps may be performed optionally:

Substep S2-5: if at least one of the mobility models $M_i$ is parametrized, and if the value of $p(M_i|z_{1 \to k}, t_{1 \to k})$ which has been calculated in substep S2-4 for one value of each model parameter is significantly higher than those obtained for the other model parameter values: selecting the model parameter value that maximizes $p(M_i|z_{1 \to k}, t_{1 \to k})$ and carrying out subsequent executions of the loop S2 with only the selected model parameter value for the concerned mobility model. The model probability value may be calculated as follows:

$$p(M_i|z_{1 \to k}, t_{1 \to k}) = \sum_{\theta \in \Theta} p(M_i|z_{1 \to k}, t_{1 \to k}, \theta)p(\theta)$$

where $\theta$ is the model parameter, $p(\theta)$ is the related probability value and $\theta$ is the set of possible values of the model parameter $\theta$. This processing can be simplified by performing a preliminary step to identify the best model parameter value that fits the measurement results according to the considered mobility model, and then computing the probability value $p(M_i|z_{1 \to k}, t_{1 \to k})$ as follows:

$$p(M_i|z_{1 \to k}, t_{1 \to k}) = p(M_i|z_{1 \to k}, t_{1 \to k}, \theta^*)$$

where $\theta^* = \underset{\theta \in \Theta}{\operatorname{argmax}} \, p(\theta)$. The solution of the problem $\theta^* = \underset{\theta \in \Theta}{\operatorname{argmax}} \, p(\theta)$ may be determined using heuristic methods such as genetic algorithms for searching the optimal or near-to-optimal solution that matches the measurement results for the corresponding mobility model;

Substep S2-6: if the values of $p(M_i|z_{1 \to k}, t_{1 \to k})$ calculated in substep S2-4 for all the mobility models $M_i$ of the subset are below a mismatch threshold, producing a warning signal for indicating that the carrier 10 does not correspond to any of the mobility models used, and that it might be considered as an intruder. For example, the mismatch threshold may equal 0.1;

Substep S2-7: the carrier type associated with the mobility model $M_i$ that corresponds to the highest one among the values $p(M_i|z_{1 \to k}, t_{1 \to k})$ as obtained in substeps S2-4 and S2-5, called best-fit mobility model, is the most probable one for the carrier 10. In case several of the mobility models $M_i$ of the subset correspond to a same carrier type, for example combined with a different motion type in each of these mobility models, then the related mobility model probability values $p(M_i|z_{1 \to k}, t_{1 \to k})$ are to be added for obtaining the updated probability value relating to this carrier type; and

Substep S2-8: if the value $p(M_i|z_{1 \to k}, t_{1 \to k})$ as obtained in substeps S2-4 and S2-5 for the best-fit mobility model is above a positive-identification threshold, using at least some of the collected measurement results for supplementing this best-fit mobility model in the database as recorded in the storage unit 3. Such mobility model supplementation is easier to implement when the best-fit mobility model is of data-driven type. For example, the positive-identification threshold may equal 0.9.

Substeps S2-2 to S2-8 are executed by the computing node 2.

Although the above-detailed description deals with a Bayesian implementation of the invention, alternative implementations are also possible. For example, the well-known Maximum Likelihood Estimation (MLE) method may be used for this end. Other frequentist estimation methods are also suitable for the implementation of the invention such as confidence interval estimation, confidence region estimation, and the margin of error estimation. The matching score value may be computed according to the cited methods as a probability, an informant, i.e. the log of the log-likelihood function, a degree of confidence, a standard deviation or a standard error.

Although the invention has been described and illustrated for the particular example of an air carrier in a geographical zone to be monitored, it can be applied to any radio-connected vehicle within any geographical zone. Applications of the invention in the domains of road traffic and marine traffic instead of air traffic may be useful too.

## Claims

1.  A method for characterizing a carrier (10) which is equipped with a transmitter (11) onboard said carrier, wherein the transmitter transmits radio signals (S) and at least one receiver (1a-1c) is capable of measuring at least one feature of the radio signals, the method comprising:

- collecting at least one measurement result of the at least one feature of the radio signals (S) from the at least one receiver (1a-1c),

**characterized in that** the method further comprises the following steps:

- obtaining a set of several mobility models, each mobility model determining at least one state value or at least one state variation value possible for the carrier (10) equipped with the transmitter (11);
- obtaining a relation model that connects state values possible for the carrier (10) equipped with the transmitter (11) to values of the at least one feature of the radio signals (S);
- for each out of a subset containing at least two of the mobility models, computing a matching score value that relates to the at least one collected measurement result to match the mobility model through the relation model; and
- determining one of the mobility models of the subset, referred to as best-fit mobility model, that corresponds to a highest one of the matching score values.

2. The method according to claim 1, wherein each mobility model of the subset is associated with a carrier type such that the at least one state value or the at least one state variation value of said mobility model is compatible with a transmitter-equipped device of said carrier type, and the method further comprises assigning the carrier type of the best-fit mobility model to the carrier (10) equipped with the transmitter (11).

3. The method according to claim 1 or 2, wherein the measured at least one feature of the radio signals (S) comprises at least one among:

a reception radio power, and the relation model comprises a path loss model;
a reception direction of the radio signals (S), and the relation model comprises at least one detection angle range;
at least one radio signal detection time, and the relation model comprises at least one detection delay range; and
a Doppler-shift value, and the relation model comprises a Doppler-shift model.

4. The method according to one of the preceding claims, wherein the matching score value is computed for each mobility model of the subset using a Bayesian inference, the matching score value then being a probability value for the carrier (10) equipped with the transmitter (11) to meet the mobility model,
or the matching score value is computed for each mobility model of the subset using metrics which is suitable for quantifying a difference between the at least one collected measurement result and at least one value for the radio signal feature that is inferred from the mobility model through the relation model.

5. The method according to one of the preceding claims, further comprising one of the following steps:

comparing each of the computed matching score values with a mismatch threshold and producing a warning signal if all computed matching score values are lower than the mismatch threshold; and
comparing the matching score value computed for the best-fit mobility model with a positive-identification threshold, and if said matching score value computed for the best-fit mobility model is above the positive-identification threshold, supplementing said best-fit mobility model with at least one additional data corresponding to or inferred from the at least one collected measurement result of the radio signals (S).

6. The method according to one of the preceding claims, wherein each mobility model is suitable for determining variations of the at least one feature of the radio signals (S) over time, using the relation model,
and the step of collecting at least one measurement result comprises collecting a plurality of successive measurement results which are associated with respective time values.

7. The method according to claim 6, wherein each mobility model is of at least one of the following types:

a data-driven type where the mobility model comprises a series of state values to occur at respective time values;
a physics-based equation that connects state values with respective time values;
an empirical equation, in particular determined by using a neural network from measurement results collected before the method is implemented, that connects state values with respective time values; and
a parametrized type where variations of state values over time depend on one or several model parameter(s).

8. The method according to claim 6 or 7, wherein the carrier (10) is a mobile carrier, and the transmitter (11) transmits the radio signals (S) during an ongoing moving of the carrier, and wherein a value of the radio signal feature depends on a position or velocity of the carrier, and the at least one state value comprises at least one among:

position values possible for the carrier (10) at respective time values,
velocity values possible for the carrier (10) at respective time values, and
possible values for at least one angle between a direction tangential to a trajectory of the carrier (10) and a reference direction at respective time values.

9. The method according to claim 8, wherein successive measurement results are collected from the at least one receiver (1a-1c) while the carrier (10) is moving, and wherein the method comprises for each mobility model out of the subset:

- inferring from said mobility model an information about a state of the carrier (10) at a time value that corresponds to or is later than at least one newly collected measurement result; and
- calculating an updated matching score value relating to the carrier to match said mobility model by using the information and said at least one newly collected measurement result.

10. The method according to claim 9, wherein the updated matching score value for each mobility model of the subset is calculated by combining the information, at least one probability value related to the at least one newly collected measurement result and a matching score value for the carrier to match said mobility model as available before the at least one newly collected measurement result.

11. The method according to claim 9 or 10, wherein steps of collecting at least one further measurement result, inferring a further information from each mobility model of the subset about a state of the carrier (10) at a time value that corresponds to or is later than the further measurement result, and calculating further updated matching score values relating to the carrier to match each mobility model of the subset by using the further information and said further measurement result, are executed as a loop which is repeated while the carrier is moving.

12. The method according to one of the preceding claims, wherein the matching score values are calculated using prior-knowledge values which are respectively associated with the mobility models of the subset, said prior-knowledge values originating from knowledge acquired before executing the method.

13. The method according to one of the preceding claims, implemented for monitoring a geographical zone, in particular statistically analysing a traffic currently occurring in said geographical zone or characterizing a transmitter-equipped mobile carrier (10) that is currently intruding into said geographical zone.

14. A detection system comprising:

- at least one receiver (1a-1c) which is capable of measuring at least one feature of radio signals (S);
- at least one computing node (2); and
- a storage unit (3) which is accessible to the at least one computing node (2) and configured to store mobility models each determining at least one state value or state variation value,

wherein the detection system is configured to execute a method according to one of the preceding claims.

15. The detection system of claim 14, further comprising a casing (4) which accommodates the computing node (2) and the storage unit (3), and the at least one receiver (1a-1c) is connected to said computing node through the casing.

**Patentansprüche**

1. Verfahren zur Charakterisierung eines Trägers (10), welcher mit einem Transmitter (11) bordseitig des Trägers ausgestattet ist, wobei der Transmitter Funksignale (S) sendet und wenigstens ein Empfänger (1a-1c) in der Lage ist, wenigstens ein Merkmal der Funksignale zu messen, wobei das Verfahren umfasst:

- Erfassen wenigstens eines Messergebnisses des wenigstens einen Merkmals der Funksignale (S) von dem wenigstens einen Empfänger (1a-1c),

**dadurch gekennzeichnet, dass** das Verfahren ferner die folgenden Schritte umfasst:

- Erhalten einer Menge mehrerer Beweglichkeitsmodelle, wobei jedes Beweglichkeitsmodell wenigstens einen Zustandswert oder wenigstens einen Zustandsvariationswert bestimmt, welcher für den Träger (10), welcher mit dem Transmitter (11) ausgestattet ist, möglich ist;
- Erhalten eines Relationsmodells, welches mögliche Zustandswerte für den Träger (10), welcher mit dem Transmitter (11) ausgestattet ist, mit Werten des wenigstens einen Merkmals der Funksignale (S) verbindet;
- für jedes aus einer Teilmenge, welche wenigstens zwei der Beweglichkeitsmodelle enthält, Berechnen eines Übereinstimmungsbewertungswertes, welcher auf das wenigstens eine erfasste Messergebnis bezogen ist, um durch das Relationsmodell mit dem Beweglichkeitsmodell übereinzustimmen; und
- Bestimmen eines der Beweglichkeitsmodelle der Teilmenge, bezeichnet als bestpassendes Beweglichkeitsmodell, welches einem Höchsten der Übereinstimmungsbewertungswerte entspricht.

2. Verfahren nach Anspruch 1, wobei jedes Beweglichkeitsmodell der Teilmenge mit einem Trägertyp verbunden ist, so dass der wenigstens eine Zustandswert oder der wenigstens eine Zustandsvariationswert des Beweglichkeitsmodells mit einer mit einem Transmitter ausgestatteten Vorrichtung des Trägertyps kompatibel ist, und das Verfahren ferner ein Verbinden des Trägertyps des bestpassenden Beweglichkeitsmodells mit dem Träger (10), welcher mit dem Transmitter (11) ausgestattet ist, umfasst.

3. Verfahren nach Anspruch 1 oder 2, wobei das gemessene wenigstens eine Merkmal der Funksignale (S) wenigstens eines umfasst, aus:

- einer Empfangsfunkleistung, und das Relationsmodell umfasst ein Pfadverlustmodell;
- einer Empfangsrichtung der Funksignale (S), und das Relationsmodell umfasst wenigstens einen Detektionswinkelbereich;
- wenigstens eine Funksignal-Detektionszeit, und das Relationsmodell umfasst wenigstens einen Detektionsverzögerungsbereich; und
- einen Doppler-Verschiebungswert, und das Relationsmodell umfasst ein Doppler-Verschiebungsmodell.

4. Verfahren nach einem der vorhergehenden Ansprüche, wobei der Übereinstimmungsbewertungswert für jedes Beweglichkeitsmodell der Teilmenge unter Verwendung einer Bayesschen Inferenz berechnet wird, wobei der Übereinstimmungsbewertungswert dann ein Wahrscheinlichkeitswert für den mit Träger (10) ist, welcher mit dem Transmitter (11) ausgestattet ist, um das Beweglichkeitsmodell zu erfüllen, oder wobei der Übereinstimmungsbewertungswert für jedes Beweglichkeitsmodell der Teilmenge unter Verwendung von Metriken berechnet wird, welche geeignet sind, eine Differenz zwischen dem wenigstens einen erfassten Messergebnis und wenigstens einem Wert für das Funksignalmerkmal zu quantifizieren, welcher aus dem Beweglichkeitsmodell durch das Relationsmodell abgeleitet ist.

5. Verfahren nach einem der vorhergehenden Ansprüche, ferner umfassend einen der folgenden Schritte:

Vergleichen jedes der berechneten Übereinstimmungsbewertungswerte mit einem Fehlanpassungsschwellenwert und Produzieren eines Warnsignals, falls alle berechneten Übereinstimmungsbewertungswerte niedriger als der Fehlanpassungsschwellenwert sind; und
Vergleichen des Übereinstimmungsbewertungswertes, welcher für das bestpassende Beweglichkeitsmodell berechnet wird, mit einem Positiv-Identifikationsschwellenwert, und falls der für das bestpassende Beweglichkeitsmodell berechnete Übereinstimmungsbewertungswert über dem Positiv-Identifikationsschwellenwert liegt, Supplementieren des bestpassenden Beweglichkeitsmodells mit wenigstens einem zusätzlichen Datensatz, welcher dem wenigstens einen erfassten Messergebnis der Funksignale (S) entspricht oder daraus abgeleitet ist.

6. Verfahren nach einem der vorhergehenden Ansprüche, wobei jedes Beweglichkeitsmodell geeignet ist, zum Bestimmen von Variationen des wenigstens einen Merkmals der Funksignale (S) über die Zeit unter Verwendung des Relationsmodells, und der Schritt eines Erfassens wenigstens eines Messergebnisses ein Erfassen einer Mehrzahl aufeinanderfolgender Messergebnisse umfasst, welche mit jeweiligen Zeitwerten verbunden sind.

7. Verfahren nach Anspruch 6, wobei jedes Beweglichkeitsmodell wenigstens einer der folgenden Typen ist:

ein datengetriebener Typ, bei welchem das Beweglichkeitsmodell eine Reihe von Zustandswerten umfasst, um zu jeweiligen Zeitwerten aufzutreten;

eine physikbasierte Gleichung, welche Zustandswerte mit jeweiligen Zeitwerten verbindet;

eine empirische Gleichung, insbesondere bestimmt unter Verwendung eines neuronalen Netzes aus Messergebnissen, welche erfasst worden sind, bevor das Verfahren implementiert wird, welches die Zustandswerte mit jeweiligen Zeitwerten verbindet; und

ein parametrisierter Typ, bei welchem Variationen von Zustandswerten über eine Zeit von einem oder mehreren Modellparameter(n) abhängen.

8. Verfahren nach Anspruch 6 oder 7, wobei der Träger (10) ein mobiler Träger ist, und der Transmitter (11) die Funksignale (S) während einer laufenden Bewegung des Trägers sendet, und wobei ein Wert des Funksignalmerkmals von einer Position oder einer Geschwindigkeit des Trägers abhängt, und der wenigstens eine Zustandswert wenigstens eines umfasst, aus:

möglichen Positionswerten für den Träger (10) zu jeweiligen Zeitwerten,

möglichen Geschwindigkeitswerten für den Träger (10) zu jeweiligen Zeitwerten, und

möglichen Werten für wenigstens einen Winkel zwischen einer Richtung, welche tangential zu einer Trajektorie des Trägers (10) ist, und einer Referenzrichtung zu jeweiligen Zeitwerten.

9. Verfahren nach Anspruch 8, wobei aufeinanderfolgende Messergebnisse von dem wenigstens einen Empfänger (1a-1c) erfasst werden, während sich der Träger (10) bewegt, und wobei das Verfahren für jedes Beweglichkeitsmodell aus der Teilmenge umfasst:

- Ableiten aus dem Beweglichkeitsmodell einer Information über einen Zustand des Trägers (10) zu einem Zeitwert, welcher wenigstens einen neu erfassten Messergebnis entspricht oder später als dieses ist; und
- Berechnen eines aktualisierten Übereinstimmungsbewertungswertes, welcher auf den Träger bezogen ist, um mit dem Beweglichkeitsmodell übereinzustimmen, unter Verwendung der Information und des wenigstens einen neu erfassten Messergebnisses.

10. Verfahren nach Anspruch 9, wobei der aktualisierte Übereinstimmungsbewertungswert für jedes Beweglichkeitsmodell der Teilmenge durch Kombinieren der Information, wenigstens eines Wahrscheinlichkeitswertes, welcher auf das wenigstens eine neu erfasste Messergebnis bezogen ist und eines Übereinstimmungsbewertungswertes für den Träger berechnet wird, um mit dem Beweglichkeitsmodell übereinzustimmen, wie es vor dem wenigstens einen neu erfassten Messergebnis verfügbar ist.

11. Verfahren nach Anspruch 9 oder 10, wobei Schritte eines Erfassens wenigstens eines weiteren Messergebnisses, eines Ableitens einer weiteren Information aus jedem Beweglichkeitsmodell der Teilmenge über einen Zustand des Trägers (10) zu einem Zeitpunkt, welcher dem weiteren Messergebnis entspricht oder später als dieses ist, und eines Berechnens weiterer aktualisierter Übereinstimmungsbewertungswerte in Bezug auf den Träger, um mit jedem Beweglichkeitsmodell der Teilmenge übereinzustimmen, unter Verwendung der weiteren Information und des weiteren Messergebnisses, als eine Schleife ausgeführt werden, welche wiederholt wird, während sich der Träger bewegt.

12. Verfahren nach einem der vorhergehenden Ansprüche, wobei die Übereinstimmungsbewertungswerte unter Verwendung von Vorwissenswerten berechnet werden, welche jeweils mit den Beweglichkeitsmodellen der Teilmenge verbunden sind, wobei die Vorwissenswerte aus Wissen stammen, welches vor Ausführen des Verfahrens erworben worden ist.

13. Verfahren nach einem der vorhergehenden Ansprüche, implementiert zum Überwachen einer geografischen Zone, insbesondere zum statistischen Analysieren eines Verkehrs, welcher aktuell in der geografischen Zone auftritt oder zum Charakterisieren eines mit einem Transmitter ausgestatteten mobilen Trägers (10), welcher aktuell in die geografische Zone eindringt.

14. Detektionssystem, umfassend:

- wenigstens einen Empfänger (1a-1c), welche in der Lage ist, wenigstens ein Merkmal von Funksignalen (S) zu messen;
- wenigstens einen Rechenknoten (2); und
- eine Speichereinheit (3), welche für den wenigstens einen Rechenknoten (2) zugänglich ist und dazu eingerichtet ist, Beweglichkeitsmodelle zu speichern, welche jeweils wenigstens einen Zustandswert oder einen Zustandsvariationswert bestimmen,

wobei das Detektionssystem dazu eingerichtet ist, ein Verfahren nach einem der vorhergehenden Ansprüche auszuführen.

15. Detektionssystem nach Anspruch 14, ferner umfassend ein Gehäuse (4), welches den Rechenknoten (2) und die Speichereinheit (3) aufnimmt, und wobei der wenigstens eine Empfänger (1a-1c) über das Gehäuse mit dem Rechenknoten verbunden ist.

**Revendications**

1. Procédé de caractérisation d'un porteur (10) qui est équipé d'un émetteur (11) embarqué sur ledit porteur, dans lequel l'émetteur transmet des signaux radio (S) et au moins un récepteur (1a-1c) est capable de mesurer au moins une caractéristique des signaux radio, le procédé comprenant :

   - la collecte d'au moins un résultat de mesure de l'au moins une caractéristique des signaux radio (S) à partir de l'au moins un récepteur (1a-1c),

   **caractérisé en ce que** le procédé comprend en outre les étapes suivantes :

   - l'obtention d'un ensemble de plusieurs modèles de mobilité, chaque modèle de mobilité déterminant au moins une valeur d'état ou au moins une valeur de variation d'état possible pour le porteur (10) équipé de l'émetteur (11) ;
   - l'obtention d'un modèle de relation qui relie des valeurs d'état possibles pour le porteur (10) équipé de l'émetteur (11) à des valeurs de l'au moins une caractéristique des signaux radio (S) ;
   - pour chacun parmi un sous-ensemble contenant au moins deux des modèles de mobilité, le calcul d'une valeur de score de concordance qui se rapporte à l'au moins un résultat de mesure collecté pour qu'elle concorde avec le modèle de mobilité par l'intermédiaire du modèle de relation ; et
   - la détermination de l'un des modèles de mobilité du sous-ensemble, appelé modèle de mobilité le mieux adapté, qui correspond à une valeur la plus élevée des valeurs de score de concordance.

2. Procédé selon la revendication 1, dans lequel chaque modèle de mobilité du sous-ensemble est associé à un type de porteur de sorte que l'au moins une valeur d'état ou l'au moins une valeur de variation d'état dudit modèle de mobilité est compatible avec un dispositif équipé d'émetteur dudit type de porteur, et le procédé comprend en outre l'attribution, au porteur (10) équipé de l'émetteur (11), du type de porteur du modèle de mobilité le mieux adapté.

3. Procédé selon la revendication 1 ou 2, dans lequel l'au moins une caractéristique mesurée des signaux radio (S) comprend au moins un parmi :

   une puissance radio de réception, et le modèle de relation comprend un modèle de perte de trajet ;
   une direction de réception des signaux radio (S), et le modèle de relation comprend au moins une plage d'angle de détection ;
   au moins un temps de détection de signal radio, et le modèle de relation comprend au moins une plage de retard de détection ; et
   une valeur de décalage Doppler, et le modèle de relation comprend un modèle de décalage Doppler.

4. Procédé selon l'une des revendications précédentes, dans lequel la valeur de score de concordance est calculée pour chaque modèle de mobilité du sous-ensemble à l'aide d'une inférence bayésienne, la valeur de score de concordance étant alors une valeur de probabilité pour que le porteur (10) équipé de l'émetteur (11) satisfasse le modèle de mobilité,
   ou la valeur de score de concordance est calculée pour chaque modèle de mobilité du sous-ensemble en utilisant une métrique qui est appropriée pour quantifier une différence entre l'au moins un résultat de mesure collecté et au moins une valeur pour la caractéristique de signal radio qui est déduite du modèle de mobilité par l'intermédiaire du modèle de relation.

5. Procédé selon l'une des revendications précédentes, comprenant en outre l'une des étapes suivantes :

la comparaison de chacune des valeurs de score de concordance calculées avec un seuil de discordance et la production d'un signal d'avertissement si toutes les valeurs de score de concordance calculées sont inférieures au seuil de discordance ; et

la comparaison de la valeur de score de concordance calculée pour le modèle de mobilité le mieux adapté avec un seuil d'identification positive, et si ladite valeur de score de concordance calculée pour le modèle de mobilité le mieux adapté est supérieure au seuil d'identification positive, le fait de compléter ledit modèle de mobilité le mieux adapté avec au moins une donnée supplémentaire correspondant à, ou déduite de, l'au moins un résultat de mesure collecté des signaux radio (S).

6. Procédé selon l'une des revendications précédentes, dans lequel chaque modèle de mobilité est approprié pour déterminer des variations de l'au moins une caractéristique des signaux radio (S) dans le temps, à l'aide du modèle de relation,

et l'étape de collecte d'au moins un résultat de mesure comprend la collecte d'une pluralité de résultats de mesure successifs qui sont associés à des valeurs temporelles respectives.

7. Procédé selon la revendication 6, dans lequel chaque modèle de mobilité est d'au moins l'un des types suivants :

un type guidé par données dans lequel le modèle de mobilité comprend une série de valeurs d'état attendues pour se produire à des valeurs temporelles respectives ;

une équation basée sur la physique qui relie des valeurs d'état à des valeurs temporelles respectives ;

une équation empirique, en particulier déterminée en utilisant un réseau neuronal à partir de résultats de mesure collectés avant la mise en œuvre du procédé, qui relie des valeurs d'état à des valeurs temporelles respectives ; et

un type paramétré où des variations de valeurs d'état dans le temps dépendent d'un ou plusieurs paramètres de modèle.

8. Procédé selon la revendication 6 ou 7, dans lequel le porteur (10) est un porteur mobile, et l'émetteur (11) transmet les signaux radio (S) pendant un déplacement en cours du porteur, et dans lequel une valeur de la caractéristique de signal radio dépend d'une position ou d'une vitesse du porteur, et l'au moins une valeur d'état comprend au moins un parmi :

des valeurs de position possibles pour le porteur (10) à des valeurs temporelles respectives,

des valeurs de vitesse possibles pour le porteur (10) à des valeurs temporelles respectives, et

des valeurs possibles pour au moins un angle entre une direction tangentielle à une trajectoire du porteur (10) et une direction de référence à des valeurs temporelles respectives.

9. Procédé selon la revendication 8, dans lequel des résultats de mesure successifs sont collectés à partir de l'au moins un récepteur (1a-1c) pendant que le porteur (10) est en mouvement, et dans lequel le procédé comprend pour chaque modèle de mobilité du sous-ensemble :

- le fait de déduire à partir dudit modèle de mobilité, une information sur un état du porteur (10) à une valeur temporelle qui correspond à ou est postérieure à au moins un résultat de mesure nouvellement collecté ; et

- le calcul d'une valeur de score de concordance mise à jour relative au porteur pour qu'il concorde audit modèle de mobilité en utilisant l'information et ledit au moins un résultat de mesure nouvellement collecté.

10. Procédé selon la revendication 9, dans lequel la valeur de score de concordance mise à jour pour chaque modèle de mobilité du sous-ensemble est calculée en combinant l'information, au moins une valeur de probabilité relative à l'au moins un résultat de mesure nouvellement collecté et une valeur de score de concordance pour que le porteur concorde avec ledit modèle de mobilité tel que disponible avant l'au moins un résultat de mesure nouvellement collecté.

11. Procédé selon la revendication 9 ou 10, dans lequel des étapes consistant à collecter au moins un résultat de mesure supplémentaire, à déduire une information supplémentaire à partir de chaque modèle de mobilité du sous-ensemble sur un état du porteur (10) à une valeur temporelle qui correspond ou est ultérieure au résultat de mesure supplémentaire, et à calculer des valeurs de score de concordance mises à jour supplémentaires relatives au porteur pour qu'il concorde avec chaque modèle de mobilité du sous-ensemble en utilisant l'information supplémentaire et ledit résultat de mesure supplémentaire, sont exécutées sous forme d'une boucle qui se répète pendant que le porteur est en mouvement.

12. Procédé selon l'une des revendications précédentes, dans lequel les valeurs de score de concordance sont calculées à l'aide de valeurs de connaissance préalable qui sont respectivement associées aux modèles de mobilité du sous-ensemble, lesdites valeurs de connaissance préalable provenant d'une connaissance acquise avant l'exécution du procédé.

13. Procédé selon l'une des revendications précédentes, mis en œuvre pour la surveillance d'une zone géographique, notamment pour l'analyse statistique d'un trafic en train de se produire dans ladite zone géographique ou la caractérisation d'un porteur mobile (10) équipé d'émetteur qui est en cours de pénétration dans ladite zone géographique.

14. Système de détection comprenant :

- au moins un récepteur (1a-1c) qui est capable de mesurer au moins une caractéristique de signaux radio (S) ;
- au moins un nœud de calcul (2) ; et
- une unité de stockage (3) qui est accessible pour l'au moins un nœud de calcul (2) et configurée pour stocker des modèles de mobilité déterminant chacun au moins une valeur d'état ou au moins une valeur de variation d'état,

dans lequel le système de détection est configuré pour exécuter un procédé selon l'une des revendications précédentes.

15. Système de détection selon la revendication 14, comprenant en outre un boîtier (4) qui accueille le nœud de calcul (2) et l'unité de stockage (3), et l'au moins un récepteur (1a-1c) est connecté audit nœud de calcul à travers le boîtier.

FIG. 1

FIG. 2

S2

k ← k-1

S1
MOBILITY MODELS

MEASUREMENT OF RADIO SIGNAL — S2-1

$z_k$

FOR EACH $M_i$

OBTAINING $p(z_k | x_k)$ — S2-2

PRIOR KNOWLEDGE

OBTAINING $p(x_k | x_{k-1}, M_i, t_k, t_{k-1})$ — S2-3

S10

$M_i$

CALCULATING $p(M_i | z_{1 \rightarrow k}, t_{1 \rightarrow k})$ — S2-4

$p(M_i)$

PARAMETER VALUE SELECTION — S2-5

INTRUDER SITUATION ? — S2-6

MOST PROBABLE CARRIER TYPE — S2-7

POSITIVE IDENTIFICATION ? — S2-8

EP 4 632 715 B1

18

**EP 4 632 715 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20220415191 A1